# EUROPÄISCHE PATENTSCHRIFT

(11) **EP 3 966 550 B1**
(45) Veröffentlichungstag und Bekanntmachung des Hinweises auf die Patenterteilung: **28.08.2024**
(21) Anmeldenummer: 20723331.3
(22) Anmeldetag: 29.04.2020
(51) Int. Cl.: G01N 15/06

(54) **PARTIKELSAMMELVORRICHTUNG, PARTIKELSAMMELSYSTEM SOWIE VERFAHREN ZUM BETREIBEN EINES SOLCHEN**
PARTICLE COLLECTING DEVICE, PARTICLE COLLECTING SYSTEM, AND METHOD FOR OPERATING SUCH A DEVICE
DISPOSITIF DE COLLECTE DE PARTICULES, SYSTÈME DE COLLECTE DE PARTICULES ET PROCÉDÉ DE FONCTIONNEMENT ASSOCIÉ

(30) Priorität: 07.05.2019 DE 102019111821
(43) Veröffentlichungstag der Anmeldung: 16.03.2022
(73) Patentinhaber: CleanControlling GmbH, 78576 Emmingen-Liptingen (DE)
(72) Erfinder: BURGER, Volker, 78576 Emmingen-Liptingen (DE)
(74) Vertreter: Patent- und Rechtsanwälte Behrmann Wagner PartG mbB
(86) Internationale Anmeldenummer: PCT/EP2020/061816
(87) Internationale Veröffentlichungsnummer: WO 2020/225040

(56) Entgegenhaltungen:
- DE-A1- 102017 116 028
- DE-A1- 102017 124 265

## Beschreibung

Die Erfindung betrifft eine Partikelsammelvorrichtung zum Sammeln von Partikeln von Oberflächen für eine Partikelanalyse im Rahmen der Bestimmung der technischen Sauberkeit für Prüfkörper, insbesondere Leiterplatten, Batteriemodulen, und/oder Batteriestacks, nach dem Oberbegriff des Patentanspruchs 1.

Ferner betrifft die Erfindung ein Partikelanalysesystem zur Bestimmung der technischen Sauberkeit von Prüfkörpern, insbesondere Leiterplatten, Batteriemodulen und/oder Batteriestacks, nach Patentanspruch 11, das neben einer solchen Partikelsammelvorrichtung auch ein Flüssigkeitsreservoir mit Flüssigkeit, insbesondere Wasser oder Kaltreiniger, sowie Analysemittel aufweist.

Schließlich betrifft die Erfindung auch ein Verfahren zum Betreiben einer derartigen Partikelsammelvorrichtung nach Patentanspruch 13.

Bei der industriellen Fertigung von Prüfkörpern, insbesondere Leiterplatten, Batteriemodulen und/oder Batteriestacks, bestehen hohe Anforderungen an die technische Sauberkeit. Sind hergestellte Bauteile, wie etwa Leiterplatten, nach der Fertigung durch eine hohe Anzahl an Partikeln verunreinigt, kann dies zu einer negativen Beeinflussung von Sensoreinheiten führen. Ferner kann eine Verunreinigung mit leitfähigen Partikeln bei spannungsbeaufschlagten Bauteilen auch zu einem Spannungsüberschlag in Form eines Lichtbogens führen, was die vollständige Zerstörung zur Folge haben kann.

Aus diesem Grund ist es im Rahmen der Qualitätssicherung erforderlich, dass Einzelkomponenten oder gefertigte Einheiten auf ihre technische Sauberkeit geprüft werden und dass die technische Sauberkeit zudem dokumentiert wird, um auch nachträglich Chargen einer Fertigungslinie mit einer kritischen Verunreinigung identifizieren zu können.

Zur Bestimmung der technischen Sauberkeit sind aus dem Stand der Technik unterschiedliche Prüfeinrichtungen allgemein bekannt.

Aus der DE 10 2017 124 265 A1 der Anmelderin ist bereits eine erfolgreich im Markt etablierte Partikelsammelvorrichtung zum Sammeln von Partikeln im Rahmen der Prüfung der technischen Sauberkeit von Prüfkörpern allgemein bekannt. Die bekannte Partikelsammelvorrichtung weist einen Saugschlauch auf, der einen Endabschnitt zum Ansaugen eines Partikel-/Luftgemisches von einer zu prüfenden Oberfläche eines Prüfkörpers durch einen mit Unterdruckerzeugungsmitteln erzeugten Saugluftvolumenstrom aufweist. Zum Abscheiden der Partikel aus dem Partikel-/Luftgemisch durchströmt der Saugluftvolumenstrom in einer Partikelsammeleinheit einen, von Filterhaltemitteln gehaltenen Gewebefilter, weshalb sich die Partikel auf einer Partikelsammelfläche des Gewebefilters festsetzen. In einem nachgelagerten Analyse- und Auswerteprozess ermöglicht dies die Anzahl, Beschaffenheit und Größe der Partikel zu bestimmen. Allerdings setzen sich die Partikel beim Durchströmen des Gewebefilters hauptsächlich randseitig auf der Partikelsammelfläche fest, was die Ausbildung von Anhäufungen und/oder Ballungen der Partikel zur Folge hat. Auch verhindert die inhomogene Ablagerung der Partikel auf der Partikelsammelfläche ein schnelles bzw. gelegentliches Sichtprüfen zur Bestimmung des Verschmutzungsgrades der Partikelsammelfläche durch geschultes Bedienpersonal, wobei bei zu hoher Verschmutzung der Gewebefilter getauscht wird.

Dies hat zur Folge, dass teilweise erst verspätet auf einen zu hohen Verschmutzungsgrad reagiert werden kann, was dann wiederum zu zusätzlichen Kosten für nachgelagerte Reinigungsprozesse der zwischenzeitlich gefertigten Bauteile führt. Ferner werden hierbei auch Auswertungen von zu früh entnommenen und somit kaum verschmutzten Gewebefiltern durchgeführt, was auch zu einem unwirtschaftlichen Betrieb der Partikelsammelvorrichtung führt.

Ausgehend von dem vorgenannten Stand der Technik liegt der Erfindung, die Aufgabe zugrunde, eine Partikelsammelvorrichtung zur Bestimmung der technischen Sauberkeit von Prüfkörpern, insbesondere Leiterplatten, Batteriemodulen und/oder Batteriestacks, sowie ein Verfahren zum Betreiben eines solchen anzugeben, um einen wirtschaftlichen Betrieb zu ermöglichen und die Partikelsammelvorrichtung im Hinblick auf die Messprobe zu optimieren.

Diese Aufgabe wird hinsichtlich der Partikelsammelvorrichtung mit den Merkmalen des Patentanspruchs 1 gelöst, nämlich durch Aufschwemmmittel zum Überfluten der Partikelsammelfläche mit einer Flüssigkeit, insbesondere Wasser oder Kaltreiniger, in einem Aufschwemmbetriebsmodus der Partikelsammelvorrichtung, um die, insbesondere inhomogen, auf der Partikelsammelfläche im Saugbetriebsmodus abgesetzten Partikel, insbesondere kurzzeitig, aufzuschwemmen und Abgussmittel zum Ableiten der Flüssigkeit, insbesondere dem Wasser oder des Kaltreinigers, in einem Ableitbetriebsmodus, derartig, dass die Flüssigkeit, insbesondere das Wasser oder der Kaltreiniger, den Gewebefilter durchströmt und die Partikel auf der Partikelsammelfläche, insbesondere homogen verteilt, rückhaltbar sind.

Ferner wird die Aufgabe durch ein Partikelanalysesystem gemäß Patentanspruch 11 gelöst.

Hinsichtlich des Verfahrens wird die Aufgabe mit den Merkmalen des Patentanspruchs 13 gelöst.

Vorteilhafte Weiterbildungen der Erfindung sind in den Unteransprüchen angegeben.

Der Erfindung liegt der Gedanke zugrunde, die beim Durchströmen des austauschbaren Filters inhomogen und insbesondere randseitig auf der Partikelsammelfläche des Gewebefilters abgelagerten Partikel noch vor der Entnahme des austauschbaren Gewebefilters homogen und somit auf der Partikelsammelfläche gleichmäßig verteilt anzuordnen. Hierfür ist neben einem Saugbetriebsmodus der Partikelsammelvorrichtung zum Ansaugen des Partikel-/Luftgemisches mittels des durch die Unterdruckerzeugungsmittel erzeugten Saugluftvolumenstroms erfindungsgemäß auch ein Aufschwemmbetriebsmodus der Partikelsammelvorrichtung mit erfindungsgemäß vorteilhaften Aufschwemmmitteln vorgesehen. Durch die erfindungsgemäßen, in der Partikelsammelvorrichtung integrierten Aufschwemmmittel kann die Partikelsammelfläche mit einer Flüssigkeit, insbesondere Wasser oder Kaltreiniger, vollständig überflutet werden. Durch die zugeführte Flüssigkeit werden die auf der Partikelsammelfläche festgesetzten Partikel aufgeschwemmt, wobei sich die im Saugbetriebsmodus verstärkt in den Randbereichen der Partikelsammelfläche abgelagerten Partikel gleichmäßig auf der Flüssigkeitsoberfläche der zugeführten Flüssigkeit verteilen. Da unmittelbar nach dem vollständigen Überfluten der Partikelsammelfläche die Flüssigkeit durch die erfindungsgemäß vorgesehenen Abgussmittel im Rahmen eines Ableitbetriebsmodus der Partikelsammelvorrichtung abgeleitet wird, setzen sich die Partikel wiederum auf der Partikelsammelfläche des Gewebefilters fest. Beim Ableiten durchströmt die Flüssigkeit den Gewebefilter, um die beim Aufschwemmen entstandene homogene Verteilung der Partikel bei der Entnahme der Flüssigkeit nicht zu beeinflussen. Ferner wird beim Ableiten der Flüssigkeit zur Vermeidung von, die homogene Verteilung der Partikel auf der Flüssigkeitsoberfläche negativ beeinflussenden Strudeln auf eine geringe Strömungsgeschwindigkeit beim Ableiten der Flüssigkeit mittels der Abgussmittel geachtet, wobei so die homogene Struktur erhalten werden kann. Zudem ist es weiterbildend auch vorgesehen, dass beim Ableiten der Flüssigkeit weiterhin eine geringe Menge an Flüssigkeit zugeführt wird, um in den Randbereichen festgesetzte Partikel zu lösen.

Die homogene Verteilung der Partikel auf der Partikelsammelfläche nach einem durchgeführten Aufschwemmbetriebsmodus ermöglicht es Bedienpersonal durch eine Sichtprobe den Verschmutzungsgrad des Gewebefilters zu erfassen. Ferner ist auch eine optische Auswertung des Gewebefilters unmittelbar nach der Entnahme mittels optischen Analysemitteln möglich, um die Anzahl, Größe sowie die Beschaffenheit der Partikel zu erfassen.

Wesentlich bei der Erfindung ist, dass die Aufschwemmmittel zum Überfluten der Partikelsammelfläche und zum Aufschwemmen der auf der Partikelsammelfläche abgelagerten Partikel in der Partikelsammelvorrichtung integriert sind, wodurch erfindungsgemäß vorteilhaft das homogene Neuanordnen der Partikel in der Partikelsammelvorrichtung erfolgen kann. Zum einen ermöglicht dies, dass der Verschmutzungsgrad bereits durch eine Sichtprobe abgeschätzt werden kann, um den Tausch des Gewebefilters zeitlich zu variieren und insbesondere an die Anzahl der angesaugten Partikel anzupassen. Ferner kann unmittelbar nach der Entnahme des Gewebefilters aus der Partikelsammeleinheit eine optische Analyse durchgeführt werden. Mit anderen Worten ist es nichtmehr erforderlich, dass bedarfsabhängig in einem zusätzlichen Arbeitsschritt der Gewebefilter bearbeitet wird, um die für die optische Analyse erforderliche homogene Verteilung der Partikel auf der Partikelsammelfläche zu realisieren.

Bei einer Weiterbildung der Erfindung ist es bevorzugt vorgesehen, dass die Filterhaltemittel den austauschbaren Gewebefilter so im Saugluftvolumenstrom anordnen und/oder ausrichten, dass im Saugbetriebsmodus, im Aufschwemmbetriebsmodus und/oder im Ableitbetriebsmodus der Partikelsammelfläche die Flächenerstreckung des Gewebefilters und somit auch die Partikelsammelfläche möglichst horizontal ausgerichtet ist. Damit die auf die Partikel wirkende Kraftbeaufschlagung durch die Erdanziehungskraft beim Herausfiltern und/oder beim Ableiten der Flüssigkeit nur in Richtung der Partikelsammelfläche wirkt, ist es bevorzugt vorgesehen, dass die Partikelsammelfläche in einem Bereich von +/- 20°, bevorzugt +/-10°, weiter bevorzugt +/-5° um eine Horizontalebene ausgerichtet ist. Vorteilhaft verringert dies die Ausbildung von Partikel-Anhäufungen in einem Randbereich der Partikelsammelfläche.

In einer weiteren Ausführungsform der Erfindung ist es weiterbildend vorgesehen, dass die Filterhaltemittel zur Aufnahme eines Gewebefilters ausgebildet sind, der eine runde oder ovale Partikelsammelfläche aufweist. Hierbei kann vorteilhaft die Ausbildung von Partikel-Anhäufungen in winklig zulaufenden Eckbereichen vermieden werden, die sich auch durch das Überschwemmen der Partikelsammelfläche nur eingeschränkt wieder trennen lassen.

Zudem ist es weiterbildend vorgesehen, dass die Aufschwemmmittel zum Ausbilden einer Aufschwemmwanne einen hohlzylindrischen Rohrabschnitt oder einen, eine ovale Grundfläche umschließenden Mantelabschnitt aufweisen. Hierbei erstreckt sich die Aufschwemmwanne bevorzugt ausgehend von den Filterhaltemitteln oder der Partikelsammelfläche entlang einer Hochrichtung entgegen der Strömungsrichtung des Saugluftvolumenstroms im Saugbetriebsmodus, um im Aufschwemmbetriebsmodus der die Partikel aufschwemmenden Flüssigkeitsoberfläche ausreichend Raum zu verschaffen. Mit anderen Worten ist, ausgehend vom Gewebefilter bzw. der Partikelsammelfläche ein Tubus vorgesehen, der sich randseitig der Partikelsammelfläche erstreckt, damit sich die, die Partikel aufschwemmenden Flüssigkeitsoberfläche oberhalb der Partikelsammelfläche ausbilden kann und somit sich die Partikel beim Ableiten der Flüssigkeit im Ableitbetriebsmodus homogen verteilt auf der Partikelsammelfläche festsetzen können.

Weiterbildend ist es in diesem Zusammenhang auch vorgesehen, dass die Filterhaltemittel und die Aufschwemmwanne als ein in Reihe koppelbares, also saugluftleitend oder flüssigkeitsdicht verbindbares Modul ausgebildet sind. Vorteilhaft ermöglicht dies die Umsetzung einer mehrstufigen Filterung des Saugluftvolumenstroms, um insbesondere zunächst in einer ersten Filterstufe größere Partikel durch einen, eine große Porendichte aufweisenden Gewebefilter aus dem Saugluftvolumenstrom herauszufiltern und durch eine zweite Filterstufe kleinere Partikel durch einen Gewebefilter mit einer kleinen Porendichte aus dem mittels des Saugluftvolumenstroms aufgesaugten Partikel-/Luftgemisch herauszufiltern. Vorteilhaft ist es hierbei auch vorgesehen, dass das Aufschwemmen der Partikel auf den beiden Gewebefiltern zeitgleich oder zeitlich versetzt erfolgt. In diesem Zusammenhang ist es insbesondere auch vorgesehen, dass beim Überfluten der beiden Gewebefilter der die kleinere Porendichte aufweisende Gewebefilter für das Aufstauen der Flüssigkeit, insbesondere des Wassers oder des Kaltreinigers, sorgt, um somit auch die Partikel auf dem in Hochrichtung darüber angeordneten Gewebefilter Aufzuschwemmen, falls die grobe Porendichte des oberen Gewebefilters nicht zu einer für das Aufstauen der Flüssigkeit ausreichenden Erhöhung des Strömungswiderstands sorgt.

In einer weiteren bevorzugten Ausbildung der Erfindung ist es vorgesehen, dass die Unterdruckerzeugungsmittel, die Partikelsammeleinheit oder die Abgussmittel zum Aufstauen der Flüssigkeit für das Überfluten der Partikelsammelfläche Absperrmittel, insbesondere ein betätigbares Ventil oder ein gleichwertiges Sperrelement, umfassen, um das Abfließen der Flüssigkeit vollständig oder zumindest teilweise zu vermeiden. Somit wird weiterbildend vorteilhaft das Aufschwemmen auch von Gewebefiltern möglich, die eine große Porendichte aufweisen und daher beim Zuleiten der Flüssigkeit nicht für ein für das Überfluten der Partikelsammelfläche erforderliches Aufstauen der Flüssigkeit sorgen.

Ferner sieht eine Weiterbildung der Erfindung vor, dass die Filterhaltemittel Kraftspeichermittel aufweisen, die bevorzugt als wenigstens eine Druckfeder ausgebildet sind, um den Gewebefilter durch manuelle Kraftbeaufschlagung in den Filterhaltemitteln dauerhaft umfangsseitig einzuklemmen, um das Ausbilden eines Flüssigkeits- oder Saugluftvolumenstrom-Bypasses, der nicht den Gewebefilter durchströmt, zu vermeiden. Neben dem zuverlässigen Fixieren des Gewebefilters in den Filterhaltemitteln während dem Saugbetriebsmodus, dem Aufschwemmbetriebsmodus und dem Ableitbetriebsmodus ermöglicht dies auch ein vorteilhaft schnelles und unkompliziertes Austauschen des Gewebefilters.

Weiterbildend ist es auch vorgesehen, dass die Partikelsammelvorrichtung zum automatisierten Zuleiten der Flüssigkeit, insbesondere des Wassers oder des Kaltreinigers, ein Flüssigkeitsreservoir aufweist, wodurch im Aufschwemmbetriebsmodus die Flüssigkeit in die Aufschwemmmittel automatisiert zugeleitet werden kann. Alternativ ist es allerdings weiterbildend auch vorgesehen, dass die Aufschwemmmittel eine verschließbare Öffnung aufweisen, um in einem temporär herstellbaren Öffnungszustand der Partikelsammelvorrichtung oder der Aufschwemmmittel die Flüssigkeit, insbesondere das Wasser oder den Kaltreiniger, manuell, also insbesondere mittels einer Schwanenhalsflasche oder einer gleichwertigen Vorratseinheit, zuzuführen.

Ferner ist es erfindungsgemäß weiterbildend auch vorgesehen, dass ein eine Belüftungsöffnung aufweisendes Abschlusselement saugluftleitend mit dem Endabschnitt des Saugschlauchs verbunden werden kann, wobei die Belüftungsöffnung zur Vermeidung des Ansaugens von Partikeln einen Partikelfilter oder eine luftdurchlässige Membran aufweist. Durch das Abschlusselement kann trotz des Aktivieren der Unterdruckerzeugungsmittel und dem Erzeugen eines Saugluftvolumenstroms das Ansaugen von zusätzlichen Partikeln vollständig vermieden werden. Dies ermöglicht das Nachtrocknen der beim Aufschwemmvorgang mit der Flüssigkeit in Kontakt kommenden Komponenten der Partikelsammelvorrichtung. Weiterbildend kann dieser Nachtrockenvorgang zeitgleich zum Ableitbetriebsmodus aktiviert werden, wodurch auch das Ableiten der Flüssigkeit unterstützt werden kann. Alternativ ist es auch vorgesehen, dass die Nachtrockenphase erst nach dem Entfernen des Gewebefilters aktiviert wird, um Flüssigkeitsrückstände in der Partikelsammeleinheit und/oder den Aufschwemmmitteln vollständig zu entfernen.

Schließlich sieht eine Weiterbildung der Erfindung auch vor, dass der Endabschnitt des Saugschlauchs mit einer eine spaltartige oder schlitzartige Saugöffnung aufweisenden Saugdüse saugluftleitend koppelbar ist, wobei die Saugdüse mittels additiver Fertigungstechnik hergestellt wird. Hierbei ist es weiterbildend vorgesehen, dass die Oberfläche der hergestellten Saugdüse eine sehr geringe Rauheit aufweist, die in einem Bereich von einer gemittelten Rauheitstiefe mit einem Rz-Wert von 5µm bis 20µm, bevorzugt 8µm bis 15µm, weiter bevorzugt kleiner als 12µm.

Im Rahmen der Erfindung wird auch Schutz beansprucht, für ein Partikelanalysesystem zur Bestimmung der technischen Sauberkeit von Prüfkörpern, insbesondere Leiterplatten, Batteriemodulen und/oder Batteriestacks, das neben einer erfindungsgemäßen Partikelsammelvorrichtung auch ein Flüssigkeitsreservoir mit einer Flüssigkeit, insbesondere Wasser oder Kaltreiniger, zum manuellen oder automatisierten Zuleiten der Flüssigkeit zum Überfluten der Partikelsammelfläche sowie Analysemittel zum Auswerten der auf der Partikelsammelfläche festgesetzten Partikel aufweist. Hierbei kann im Rahmen des erfindungsgemäßen Partikelanalysesystems das Flüssigkeitsreservoir entweder als fest installiertes Bauteil in der Partikelsammelvorrichtung integriert sein, um insbesondere automatisiert ein Aufschwemmvorgang durchzuführen. Alternativ kann das Flüssigkeitsreservoir auch mobil und/oder tragbar, insbesondere durch eine Schwanenhalsflasche, ausgebildet sein, um das Zuführen der Flüssigkeit durch Bedienpersonal manuell auszuführen.

Zudem wird im Rahmen der Erfindung auch Schutz beansprucht für ein Verfahren zum Bestimmen der technischen Sauberkeit von Prüfkörpern, insbesondere Leiterplatten, Batteriemodulen und/oder Batteriestacks, unter Verwendung einer erfindungsgemäßen Partikelsammelvorrichtung und/oder eines erfindungsgemäßen Partikelanalysesystems mit den folgenden Schritten:
Zunächst erfolgt in einem ersten Verfahrensschritt das Ansaugen von Partikeln von einer zu prüfenden Oberfläche eines Prüfkörpers, insbesondere einer Leiterplatte, eines Batteriemoduls und/oder eines Batteriestacks durch die erfindungsgemäße Partikelsammelvorrichtung in dem Saugbetriebsmodus der Partikelsammelvorrichtung, wobei die Oberfläche des Prüfkörpers mit dem Endabschnitt des Saugschlauchs durch Prüfpersonal abgefahren wird, um durch den Saugluftvolumenstrom ein Partikel-/Luftgemisch anzusaugen. Das angesaugte Partikel-/Luftgemisch durchströmt dann in der Partikelsammeleinheit den, von den Filterhaltemitteln gehaltenen, austauschbaren Gewebefilter, um die angesaugten Partikel aus dem Partikel-/Luftgemisch herauszufiltern. In einem weiteren Verfahrensschritt erfolgt das Überfluten der Partikelsammelfläche des Gewebefilters mit einer Flüssigkeit, insbesondere mit Wasser oder einem Kaltreiniger, durch Aufschwemmmittel. Hierbei wird die Partikelsammelfläche vollständig überflutet, um die auf der Partikelsammelfläche abgesetzten Partikel aufzuschwemmen. Durch das Aufschwemmen im Aufschwemmbetriebsmodus verteilen sich die einzelnen Partikel auf der Flüssigkeitsoberfläche homogen. Anschließend wird der Ableitbetriebsmodus für das Ableiten der zugeführten Flüssigkeit durch die erfindungsgemäß vorgesehenen Abgussmittel aktiviert. Da die Flüssigkeit beim Abfließen den Gewebefilter durchströmt, setzten sich die, auf der Flüssigkeitsoberfläche homogen verteilten Partikel auf der Partikelsammelfläche fest, weshalb die homogene Verteilung erhalten werden kann.

Bei einer Weiterbildung des erfindungsgemäßen Verfahrens ist es vorgesehen, dass ein nachgelagerter Nachtrockenbetriebsmodus durchgeführt wird, um Flüssigkeitsreste aus den Aufschwemmmitteln und/oder der Partikelsammeleinheit vollständig zu entfernen. Hierzu wird zunächst ein Abschlusselement saugluftleitend mit dem Endabschnitt des Saugschlauchs verbunden. Da das Abschlusselement wenigstens eine Belüftungsöffnung aufweist, die mit einem Partikelfilter oder einer luftdurchlässigen Membran verschlossen sind, werden trotz Aktivieren der Unterdruckerzeugungsmittel von dem Saugluftvolumenstrom keine Partikel angesaugt. Der, den Saugschlauch, die Partikelsammeleinheit sowie die Aufschwemmmittel durchströmenden Saugluftvolumenstrom entfernt somit Flüssigkeitsrückstände und ermöglicht vorteilhaft die Umsetzung einer Nachtrockenphase, insbesondere auch für einen in den Filterhaltemitteln 5 angeordneten Gewebefilter 6.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Seitenansicht einer bevorzugten Ausführungsform einer erfindungsgemäßen Partikelsammelvorrichtung,
- Fig. 2:: einen Ausschnitt der aus der Fig. 1 bekannten Partikelsammelvorrichtung, wobei die Partikelsammeleinheit umfassend die erfindungsgemäßen Aufschwemmmittel im vergrößerten Maßstab dargestellt sind,
- Fig. 3:: eine schematische Seitenansicht einer bevorzugten Weiterbildung der erfindungsgemäßen Aufschwemmmittel, wobei diese als Modul ausgebildet sind, um eine Mehrzahl an Gewebefiltern im Saugluftvolumenstrom anzuordnen sowie in
- Fig. 4:: eine perspektivische Darstellung einer Saugdüse, die eine spaltenartige Saugöffnung aufweist und mit dem Endabschnitt des Saugschlauchs saugluftleitend verbindbar ist.

In den Figuren sind gleiche Elemente und Elemente mit der gleichen Funktion mit den gleichen Bezugszeichen gekennzeichnet.

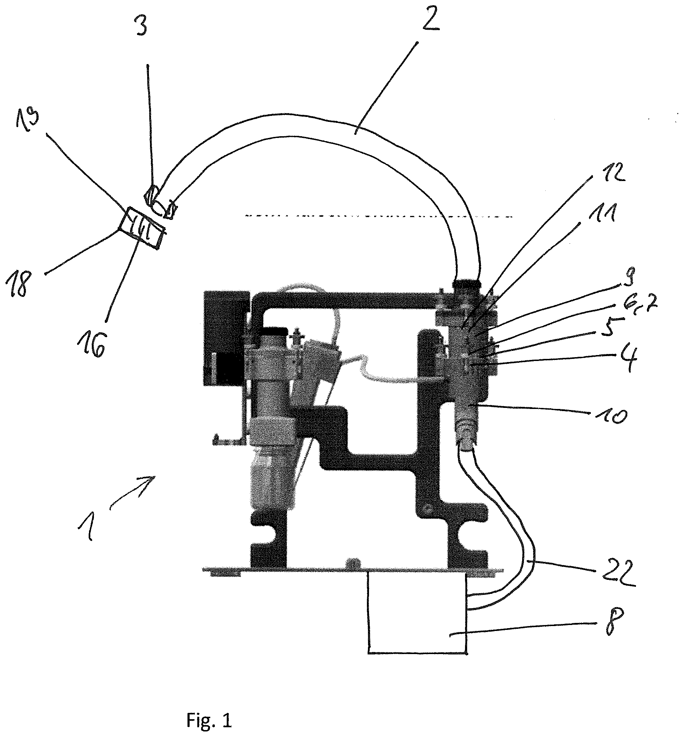

In der Fig. 1 ist eine bevorzugte Ausführungsform der erfindungsgemäßen Partikelsammelvorrichtung 1 zum Sammeln von Partikeln von Oberflächen für eine Partikelanalyse im Rahmen der Bestimmung der technischen Sauberkeit für Prüfkörper, insbesondere Leiterplatten, Batteriemodulen und/oder Batteriestacks, dargestellt. Die dargestellte Partikelsammelvorrichtung 1 umfasst einen Saugschlauch 2, der an einem frei beweglichen Ende einen Endabschnitt 3 aufweist. In einem Saugbetriebsmodus der Partikelsammelvorrichtung 1 kann durch den Endabschnitt 3 ein Partikel-/Luftgemisch mittels eines Saugluftvolumenstroms von der zu prüfenden Oberfläche des Prüfkörpers angesaugt werden. Der Saugschlauch 2 ist mit einer Partikelsammeleinheit 4 saugluftleitend verbunden, weshalb das angesaugte Partikel-/Luftgemisch die Partikelsammeleinheit 4 vollständig durchströmt. Da die Partikelsammeleinheit 4 einen austauschbaren Gewebefilter 6 aufweist, können die angesaugten Partikel aus dem Partikel-/Luftgemisch herausgefiltert werden. Zur Aufnahme und zum Halten des austauschbaren Gewebefilters 6 umfasst die Partikelsammeleinheit 4 Filterhaltemittel 5, die den Gewebefilter 6 quer zu dem, die Partikelsammeleinheit 4 durchströmenden Saugluftvolumenstrom ausrichten, damit sich die Partikel auf einer Partikelsammelfläche 7 des Gewebefilters 6 festsetzen. Zudem ist die Partikelsammeleinheit 4 über eine Unterdruckversorgungsleitung 22 mit Unterdruckerzeugungsmitteln 8 saugluftleitend verbunden, um den Saugluftvolumenstrom zum Ansaugen des Partikel-/Luftgemisches zu erzeugen. Neben den Filterhaltemitteln 5 umfasst die Partikelsammeleinheit 4 auch erfindungsgemäße Aufschwemmmittel 9, die das vollständige Überfluten der Partikelsammelfläche 7 zum Aufschwemmen der auf der Partikelsammelfläche 7 festgesetzten Partikel ermöglichen.

Im Saugbetriebsmodus der Partikelsammelvorrichtung 1 wird zunächst ein Partikel-/Luftgemisch mittels des Saugluftvolumenstroms angesaugt. Da das Partikel-/Luftgemisch den in den Filterhaltemitteln 5 gehaltenen Gewebefilter 6 vollständig durchströmt, setzen sich die angesaugten Partikel auf der Partikelsammelfläche 7 des Gewebefilters 6 ab. Aufgrund von strömungstechnischen Eigenschaften bilden sich hierbei Partikel-Anhäufungen in den Randbereichen der als runde Fläche ausgebildeten Partikelsammelfläche 7 aus. In Folge der inhomogenen Verteilung der Partikel auf der Partikelsammelfläche 7 scheitert eine optische Analyse des Gewebefilters 6, um die Anzahl, Beschaffenheit sowie Größe der einzelnen Partikel messtechnisch zu erfassen. Aus diesem Grund umfasst die erfindungsgemäße Partikelsammelvorrichtung 1 einen Aufschwemmbetriebsmodus, wobei durch die erfindungsgemäßen Aufschwemmmittel 9 die Partikelsammelfläche 7 vollständig mit einer Flüssigkeit überflutet wird, um sämtliche Partikel aufzuschwemmen. Durch das Aufschwemmen werden die Partikel-Anhäufungen gelöst, da die Partikel sich homogen auf der Flüssigkeitsoberfläche der zugeführten Flüssigkeit verteilen.

Nach dem vollständigen Aufschwemmen der Partikel wird ein Ableitbetriebsmodus der Partikelsammelvorrichtung 1 aktiviert. Hierbei wird die Flüssigkeit durch die Abgussmittel 10 abgeleitet, wobei die Flüssigkeit den Gewebefilter 6 durchströmt, damit sich die auf der Flüssigkeitsoberfläche aufgeschwemmten Partikel wieder auf der Partikelsammelfläche 7 des Gewebefilters 6 festsetzten. Da die Strömungsgeschwindigkeit beim Ableiten der Flüssigkeit gering ist, bilden sich keine Strudel aus, weshalb die homogene Verteilung der Partikel erhalten bleibt.

Ferner bilden die erfindungsgemäßen Aufschwemmmittel 9 in der in der Fig. 1 dargestellten Ausführungsform eine Aufschwemmwanne 11 aus. Die Aufschwemmwanne 11 besteht aus einem Tubus 12, der die runde Partikelsammelfläche 7 umfangsseitig umschließt und sich entgegen der Flussrichtung des Saugluftvolumenstroms im Saugbetriebsmodus erstreckt. Da der Innendurchmesser des, als hohlzylindrischer Rohrabschnitt ausgebildeten Tubus 12 dem Durchmesser der Partikelsammelfläche 7 entspricht, kann beim Ableiten der Flüssigkeit die homogene Verteilung der Partikel auf der Flüssigkeitsoberfläche erhalten bleiben. Ferner wird auch während dem Ableiten der Flüssigkeit und fallendem Flüssigkeitspegel weiterhin Flüssigkeit in geringen Mengen zugeführt, um Partikel, die sich beim Abfallen der Flüssigkeitsoberfläche an der Aufschwemmwanne festsetzen, wieder zu lösen.

Ferner umfasst die Partikelsammelvorrichtung 1 in einer bevorzugten Weiterbildung ein Abschlusselement 18, welches mit dem Endabschnitt 3 des Saugschlauchs 2 in einem Nachtrockbetriebsmodus saugluftleitend verbunden werden kann. Das Abschlusselement 18 umfasst Belüftungsöffnungen 19, die durch einen Partikelfilter 16 verschlossen sind. Dies ermöglicht die Aktivierung der Unterdruckerzeugungsmittel 8, um Flüssigkeitsreste aus der Partikelsammeleinheit 4 und den Aufschwemmmitteln 9 zu entfernen, wobei durch den Saugluftvolumenstrom keine zusätzlichen Partikel angesaugt werden können.

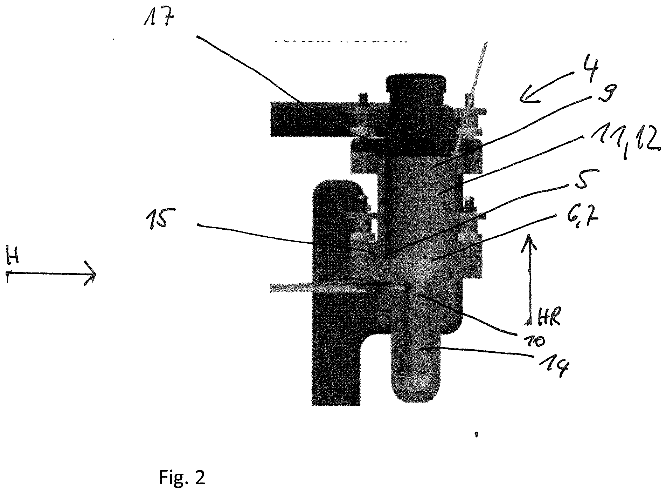

In der Fig. 2 ist die Partikelsammeleinheit 4 der aus der Fig. 1 bekannten Partikelsammelvorrichtung 1 im vergrößerten Maßstab dargestellt. Die einen Tubus 12 aufweisenden Aufschwemmmittel 9 erstrecken sich ausgehend von dem in den Filterhaltemitteln 5 gehaltenten Gewebefilter 6 entlang einer Hochrichtung HR und bilden somit durch einen inneren Rohrabschnitt die Aufschwemmwanne 11 aus. Ferner umfassen die nicht im Detail dargestellten Filterhaltemittel 5 wenigstens ein Kraftspeichermittel 15, um einen schnellen und unkomplizierten Austausch des Gewebefilters 6 zu ermöglichen. Damit auch von den Filterhaltemitteln 5 aufgenommene Gewebefilter 6 mit einer groben Porendichte durch die erfindungsgemäßen Aufschwemmmittel 9 überflutet werden können, ist der Partikelsammeleinheit 4 saugluftleitend hinter dem austauschbaren Gewebefilter 6 ein Absperrmittel 14 zugeordnet, wobei das Absperrmittel 14 als schaltbares Ventil ausgebildet ist, um das Abfließen der zugleiteten Flüssigkeit im Aufschwemmbetriebsmodus vollständig zu vermeiden.

Zudem lassen sich die Aufschwemmmittel 9 zum Zuführen der Flüssigkeit in einen Öffnungszustand bringen, um eine Öffnung 17 freizugeben. Durch diese verschließbare Öffnung 17 kann mittels einer nicht dargestellten Schwanenhalsflasche Flüssigkeit in die Aufschwemmwanne 11 zugeleitet werden, um die Partikelsammelfläche 7 zu Überfluten.

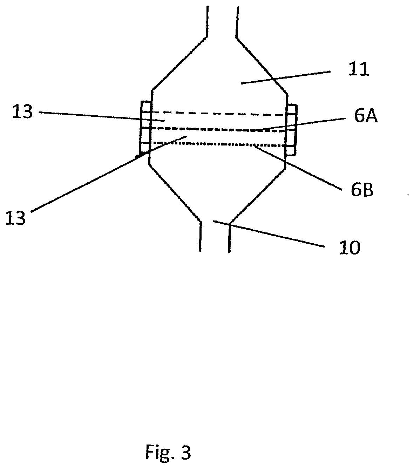

In der Fig. 3 ist eine schematische Darstellung einer bevorzugten Ausführungsform der Aufschwemmwanne 11 dargestellt. Die abgebildete Aufschwemmwanne 11 ist als Modul 13 ausgebildet, wobei es vorteilhaft vorgesehen ist, das eine Mehrzahl dieser Module 13 so miteinander verbunden werden kann, dass der mittels der Unterdruckerzeugungsmittel 8 generierte Saugluftvolumenstrom durch eine Mehrzahl an hintereinander im Saugluftvolumenstrom angeordneten Gewebefiltern 6 gefiltert wird.

Hierdurch wird es vorteilhaft ermöglicht, zunächst in einer ersten Filterstufe mit einem ersten Gewebefilter 6A mit einer ersten Porendichte größere Partikel aus dem Partikel-/Luftgemisch zu filtern, wobei dann in einer zweiten Filterstufe mit einem zweiten Gewebefilter 6B mit einer im Vergleich zu der ersten Porendichte geringeren Porendichte kleinere Partikel aus dem Partikel-/Luftgemisch herausfilterbar sind. Dies erleichtert nicht nur die optische Analyse, sondern erhöht auch die Zeitspanne bis zum Austausch des ersten 6A oder des zweiten Gewebefilters 6B, da sich die Gesamtzahl der Partikel auf zwei Gewebefiltern 6A, 6B, erteilt.

Ferner ist es in einer bevorzugten Weiterbildung der Erfindung auch vorgesehen, dass ein Aufschwemmvorgang zeitgleich beim ersten 6A und beim zweiten 6B Gewebefilter durchgeführt wird.

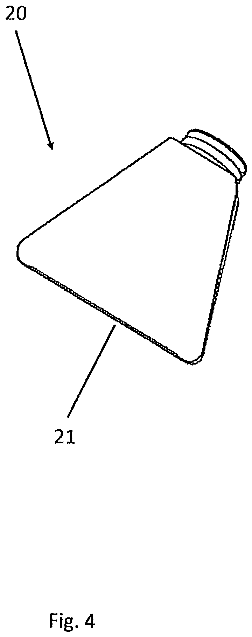

Schließlich zeigt die Fig. 4 eine Saugdüse 20, die eine schlitzartige Saugöffnung 21 aufweist und mit dem Endabschnitt 3 des Saugschlauchs 2 saugluftleitend verbunden werden kann. In einer besonders bevorzugten Ausführungsform wird die Saugdüse 20 durch additive Fertigungstechniken hergestellt und zeichnet sich durch eine besonders glatte Oberfläche aus, um das Festsetzen von Partikeln während einem Saugvorgang im Saugbetriebsmodus der Partikelsammelvorrichtung 1 vollständig zu vermeiden oder zumindest zu minimieren.

### Bezugszeichenliste

- 1: Partikelsammelvorrichtung
- 2: Saugschlauch
- 3: Endabschnitt
- 4: Partikelsammeleinheit
- 5: Filterhaltermittel
- 6: Gewebefilter
- 6A: erster Gewebefilter
- 6B: zweiter Gewebefilter
- 7: Partikelsammelfläche
- 8: Unterdruckerzeugungsmittel
- 9: Aufschwemmmittel
- 10: Abgussmittel
- 11: Aufschwemmwanne
- 12: Tubus
- 13: Modul / Einheit
- 14: Absperrmittel
- 15: Kraftspeichermittel
- 16: Partikelfilter
- 17: Verschließbare Öffnung
- 18: Abschlusselement
- 19: Belüftungsöffnung
- 20: Saugdüse
- 21: Schlitzartige Saugöffnung
- 22: Unterdruckversorgungsleitung

- H: Horizontalebene
- HR: Hochrichtung

## Patentansprüche

1. Partikelsammelvorrichtung (1) zum Sammeln von Partikeln von Oberflächen für eine Partikelanalyse im Rahmen der Bestimmung der technischen Sauberkeit für Prüfkörper, insbesondere Leiterplatten, Batteriemodule und/oder Batteriestacks, umfassend einen einen Endabschnitt (3) aufweisenden Saugschlauch (2) zum Ansaugen eines Partikel-/Luftgemisches mittels eines Saugluftvolumenstroms von der zu prüfenden Oberfläche des Prüfkörpers in einem Saugbetriebsmodus der Partikelsammelvorrichtung (1), eine Partikelsammeleinheit (4), welche einen in Filterhaltemitteln (5) fixierten, austauschbaren Gewebefilter (6) umfasst, der eine Partikelsammelfläche (7) aufweist, wobei die Filterhaltemittel (5) den Gewebefilter (6) so im Saugluftvolumenstrom anordnen, dass der Gewebefilter (6) von dem Partikel-/Luftgemisch vollständig durchströmbar ist und sich die Partikel des Partikel-/Luftgemisches auf der Partikelsammelfläche (7) absetzen sowie Unterdruckerzeugungsmittel (8) zum Erzeugen des Saugluftvolumenstroms zum Ansaugen des Partikel- /Luftgem isches, **gekennzeichnet durch** Aufschwemmmittel (9) zum Überfluten der Partikelsammelfläche (7) mit einer Flüssigkeit, insbesondere Wasser oder Kaltreiniger, in einem Aufschwemmbetriebsmodus der Partikelsammelvorrichtung (1), um die, insbesondere inhomogen, auf der Partikelsammelfläche (7) im Saugbetriebsmodus abgesetzten Partikel, insbesondere kurzzeitig, aufzuschwemmen und Abgussmittel (10) zum Ableiten der Flüssigkeit, insbesondere des Wassers oder des Kaltreinigers, in einem Ableitbetriebsmodus, derartig, dass die Flüssigkeit, insbesondere das Wasser oder der Kaltreiniger, den Gewebefilter (6) durchströmt und die Partikel auf der Partikelsammelfläche (7), insbesondere homogen verteilt, rückhaltbar sind.

2. Partikelsammelvorrichtung nach Anspruch 1, **dadurch gekennzeichnet, dass** die Filterhaltemittel (5) den austauschbaren Gewebefilter (6) derart im Aufschwemmbetriebsmodus, Ableitbetriebsmodus und/oder im Saugbetriebsmodus ausrichten, dass die Partikelsammelfläche (7) in einem Bereich von +/- 20°, bevorzugt +/-10°, weiter bevorzugt +/-5° um die Horizontalebene (H) ausgerichtet ist.

3. Partikelsammelvorrichtung nach Anspruch 1 oder 2, **dadurch gekennzeichnet, dass** die Filterhaltemittel (5) zur Aufnahme eines eine runde oder ovale Partikelsammelfläche (7) aufweisenden Gewebefilters (6) ausgebildet sind.

4. Partikelsammelvorrichtung nach einem der Ansprüche 1 bis 3, **dadurch gekennzeichnet, dass** die Aufschwemmmittel (9) zum Ausbilden einer Aufschwemmwanne (11) einen hohlzylindrischen Rohrabschnitt, insbesondere einen Tubus (12), oder einen eine ovale Grundfläche umschließenden Mantelabschnitt aufweisen, wobei sich die Aufschwemmmittel (9) ausgehend von den Filterhaltemitteln (5), insbesondere von der Partikelsammelfläche (7), entlang einer Hochrichtung (HR) entgegen der Strömungsrichtung des Saugluftvolumenstroms im Saugbetriebsmodus erstrecken.

5. Partikelsammelvorrichtung nach Anspruch 4, **dadurch gekennzeichnet, dass** die Filterhaltemittel (5) und zumindest die Aufschwemmwanne (11) als in Reihe saugluftleitend verbindbares, insbesondere kaskadierbares, Modul (13) und/oder Einheit ausgebildet sind, wobei eine Mehrzahl an Modulen (13) saugluftleitend so anordnenbar sind, dass im Aufschwemmbetriebsmodus mittels der Aufschwemmmittel (9) sämtliche der Partikelsammelflächen (7) überflutbar sind.

6. Partikelsammelvorrichtung nach einem der Ansprüche 1 bis 5, **dadurch gekennzeichnet, dass** die Unterdruckerzeugungsmittel (8), die Partikelsammeleinheit (4) oder die Abgussmittel (10) zum Aufstauen der Flüssigkeit für das Überfluten der Partikelsammelfläche (7) Absperrmittel (14), insbesondere ein schaltbares Ventil, umfassen oder diesen zugeordnet sind.

7. Partikelsammelvorrichtung nach einem der Ansprüche 1 bis 6, **dadurch gekennzeichnet, dass** die Filterhaltemittel (5) wenigstens ein Kraftspeichermittel (15), insbesondere eine Druckfeder, umfassen, wobei der Gewebefilter (6) durch manuelle Kraftbeaufschlagung in den Filterhaltemitteln (5) umfangsseitig einklemmbar ist.

8. Partikelsammelvorrichtung nach einem der Ansprüche 1 bis 7, **dadurch gekennzeichnet, dass** die Partikelsammelvorrichtung (1) ein Flüssigkeitsreservoir zum automatisierten Zuleiten der Flüssigkeit, insbesondere des Wassers oder des Kaltreinigers, im Aufschwemmbetriebsmodus umfasst oder dass die Aufschwemmmittel (9) eine verschließbare Öffnung (17) aufweisen, wobei in einem zeitweise herstellbaren Öffnungszustand der Aufschwemmmittel (9) und/oder der Partikelsammeleinheit (4) die Flüssigkeit, insbesondere das Wasser oder der Kaltreiniger, manuell zuführbar ist.

9. Partikelsammelvorrichtung nach einem der Ansprüche 1 bis 8, **dadurch gekennzeichnet, dass** die Partikelsammelvorrichtung (1) ein, einen Partikelfilter (16) und/oder eine luftdurchlässige Membran zum Verschließen einer Belüftungsöffnung (19) umfassendes Abschlusselement (18) aufweist, das mit dem Endabschnitt (3) des Saugschlauchs (2) saugluftleitend verbindbar ist, um, insbesondere im Ableitbetriebsmodus, eine Nachtrockenphase zu realisieren, wobei keine zusätzlichen Partikel mittels des Saugschlauchs (2) ansaugbar sind.

10. Partikelsammelvorrichtung nach einem der Ansprüche 1 bis 9, **dadurch gekennzeichnet, dass** der Endabschnitt (3) mit einer durch additive Fertigung hergestellte Saugdüse (20) saugluftleitend verbindbar ist, die eine spaltartige oder schlitzartige Saugöffnung (21) aufweist, wobei die Oberfläche der Saugdüse (20) eine Rauheit von einer gemittelten Rauheitstiefe mit einem Rz-Wert von 5µm bis 20µm, bevorzugt 8µm bis 15µm, weiter bevorzugt kleiner als 12µm aufweist.

11. Partikelanalysesystem zur Bestimmung der technischen Sauberkeit von Prüfkörpern, insbesondere Leiterplatten, Batteriemodulen und/oder Batteriestacks, umfassend eine erfindungsgemäße Partikelsammelvorrichtung (1) nach einem der vorherigen Ansprüche, sowie ein Flüssigkeitsreservoir mit einer Flüssigkeit, insbesondere Wasser oder Kaltreiniger, zum manuellen oder automatisierten Zuleiten der Flüssigkeit zum Aufschwemmen der Partikel sowie mit Analysemitteln, umfassend insbesondere ein Lichtmikroskop und/oder ein Mikroskop und/oder gravimetrische Auswertemittel.

12. Verwendung einer Partikelsammelvorrichtung nach einem der Ansprüche 1 bis 10 oder eines Partikelanalysesystems nach Anspruch 11 zum Prüfen der technischen Sauberkeit von Prüfkörpern, insbesondere Leiterplatten, Batteriemodulen und/oder Batteriestacks.

13. Verfahren zur Bestimmung der technischen Sauberkeit von Prüfkörpern, insbesondere Leiterplatten, Batteriemodulen und/oder Batteriestacks, insbesondere im Rahmen von industriellen Qualitätssicherungsmaßnahmen oder im Rahmen der Validierung von industriellen Fertigungsprozessen, unter Verwendung einer Partikelsammelvorrichtung (1) nach einem der Ansprüche 1 bis 10 und/oder eines Partikelanalysesystems gemäß Anspruch 11, umfassend die Schritte:
- Ansaugen von Partikeln von einer zu prüfenden Oberfläche eines Prüfkörpers, insbesondere Leiterplatte, Batteriemoduls und/oder Batteriestacks, mittels der erfindungsgemäßen Partikelsammelvorrichtung in einem Saugbetriebsmodus, wobei das mittels des Saugluftvolumenstroms angesaugte Partikel-/Luftgemisch den in den Filterhaltemitteln (5) fixierten, austauschbaren Gewebefilter (6) durchströmt und die Partikel somit auf der Partikelsammelfläche (7) zurückbleiben;
- Überfluten der Partikelsammelfläche (7) mit der Flüssigkeit, insbesondere dem Wasser oder dem Kaltreiniger, mittels der Aufschwemmmittel (9) zum Überfluten der Partikelsammelfläche (7) und zum Aufschwemmen der auf der Partikelsammelfläche (7) abgesetzten Partikel in einem Aufschwemmbetriebsmodus der Partikelsammelvorrichtung (1);
- Ableiten der zugeführten Flüssigkeit, insbesondere dem Wasser oder dem Kaltreiniger, durch die Abgussmittel (10) in einem Ableitbetriebsmodus.

14. Verfahren nach Anspruch 13, **dadurch gekennzeichnet, dass** in einem Nachtrockenbetriebsmodus der Partikelsammelvorrichtung (1) ein einen Partikelfilter (16) und/oder eine luftdurchlässige Membran umfassendes Abschlusselement (18) mit dem Endabschnitt (3) des Saugschlauchs (2) saugluftleitend verbunden wird, um nach einem Aufschwemmvorgang die Aufschwemmmittel (9) sowie insbesondere auch den austauschbaren Gewebefilter (6) durch den Saugluftvolumenstrom zu trocknen, wobei keine zusätzlichen Partikel durch den Saugluftvolumenstrom ansaugbar sind.

## Claims

1. A particle collection device (1) for collecting particles from surfaces for a particle analysis in the context of determining the technical cleanliness for test pieces, in particular printed boards, battery modules and/or battery stacks, said particle collection device (1) comprising a suction hose (2) having an end section (3), said suction hose (2) serving to suction a particle/air mixture from the test piece's surface to be tested by means of a suction air volume flow in a suctioning operating mode of the particle collection device (1), a particle collection unit (4) comprising a replaceable fabric filter (6) fixed in filter holding elements (5) and having a particle collection surface (7), the filter holding elements (5) disposing the fabric filter (6) in such a manner in the suction air volume flow that the particle/air mixture is able to flow completely through the fabric filter (6) and the particles of the particle/air mixture are deposited on the particle collection surface (7), and negative pressure generating elements (8) for generating the suction air volume flow to suction the particle/air mixture,
**characterized by**
floating elements (9) for flooding the particle collection surface (7) in a floating operating mode of the particle collection device (1) with a liquid, in particular water or cold cleaner, in order to float the particles which are deposited, in particular inhomogeneously, on the particle collection surface (7) in the suctioning operating mode, in particular for a short time, and draining elements (10) for draining the liquid, in particular the water or the cold cleaner, in a draining operating mode in such a manner that the liquid, in particular the water or the cold cleaner, flows through the fabric filter (6) and the particles are retainable on the particle collection surface (7), in particular in a homogeneously distributed manner.

2. The particle collection device according to claim 1,
**characterized in that**
the filter holding elements (5) align the replaceable fabric filter (6) in such a manner in the floating operating mode, draining operating mode and/or in the suctioning operating mode that the particle collection surface (7) is aligned in a range of +/- 20°, preferably +/- 10°, further preferably +/- 5°, about the horizontal plane (H).

3. The particle collection device according to claim 1 or 2,
**characterized in that**
the filter holding elements (5) are realized to accommodate a fabric filter (6) having a round or oval particle collection surface (7).

4. The particle collection device according to any one of claims 1 to 3,
**characterized in that**
the floating elements (9) have a hollow-cylindrical tube section, in particular a tube (12), or a casing section enclosing an oval base to realize a floating tub (11), the floating elements (9) extending, starting from the filter holding elements (5), in particular from the particle collection surface (7), along a vertical direction (HR) against the flow direction of the suction air volume flow in the suctioning operating mode.

5. The particle collection device according to claim 4,
**characterized in that**
the filter holding elements (5) and at least the floating tub (11) are realized as a module (13) and/or unit which is/are connectable in series so as to conduct the suction air, in particular cascadable, a majority of modules (13) being disposable so as to conduct the suction air in such a manner that all of the particle collection surfaces (7) are floodable by means of the floating elements (9) in the floating operating mode.

6. The particle collection device according to any one of claims 1 to 5,
**characterized in that**
the negative pressure generating elements (8), the particle collection unit (4) or the draining elements (10) comprise shut-off elements (14), in particular a switchable valve, to dam up the liquid for the flooding of the particle collection surface (7) or are associated to these.

7. The particle collection device according to any one of claims 1 to 6,
**characterized in that**
the filter holding elements (5) comprise at least a force storage element (15), in particular a compression spring, the fabric filter (6) being capable of being clamped in the filter holding elements (5) at the circumference by manual force application.

8. The particle collection device according to any one of claims 1 to 7,
**characterized in that**
the particle collection device (1) comprises a liquid reservoir for the automated supply of the liquid, in particular the water or the cold cleaner, in the floating operating mode or **in that** the floating elements (9) have a closeable opening (17), the liquid, in particular the water or the cold cleaner, being manually suppliable in a temporarily producible opening state of the floating elements (9) and/or the particle collection unit (4).

9. The particle collection device according to any one of claims 1 to 8,
**characterized in that**
the particle collection device (1) has a closing element (18) which comprises a particle filter (16) and/or an air-permeable membrane for closing a ventilation opening (19) and which is connectable to the end section (3) of the suction hose (2) so as to conduct the suction air in order to realize, in particular in the draining operating mode, a final drying phase, no additional particles being capable of being suctioned by means of the suction hose (2).

10. The particle collection device according to any one of claims 1 to 9,
**characterized in that**
the end section (3) being connectable to a suction nozzle (20), which is produced by additive manufacturing and has a gap-like or slit-like suction opening (21), so as to conduct the suction air, the surface of the suction nozzle (20) having a roughness of an average roughness depth having an Rz value of 5 µm to 20 µm, preferably 8 µm to 15 µm, further preferably smaller than 12 µm.

11. A particle analysis system for determining the technical cleanliness of test pieces, in particular printed boards, battery modules and/or battery stacks, said particle analysis system comprising a particle collection device (1) according to the invention according to the preceding claims, and a liquid reservoir with a liquid, in particular water or cold cleaner, for the manual or automated supply of the liquid to float the particles and with analysis elements comprising in particular a light microscope and/or a microscope and/or gravimetric evaluation elements.

12. A use of a particle collection device according to any one of claims 1 to 10 or a particle analysis system according to claim 11 for testing the technical cleanliness of test pieces, in particular printed boards, battery modules and/or battery stacks.

13. A method for determining the technical cleanliness of test pieces, in particular printed boards, battery modules and/or battery stacks, in particular in the context of industrial quality assurance measures or in the context of the validation of industrial manufacturing processes, using a particle collection device (1) according to any one of claims 1 to 10 and/or a particle analysis system according to claim 11, said method comprising the steps of:
- suctioning particles from a test piece's, in particular printed board's, battery module's and/or battery stack's, surface to be tested by means of the particle collection device according to the invention in a suctioning operating mode, the particle/air mixture suctioned by means of the suction air volume flow flowing through the replaceable fabric filter (6) fixed in the filter holding elements (5) and the particles, thus, remaining on the particle collection surface (7);
- flooding the particle collection surface (7) with the liquid, in particular the water or the cold cleaner, by means of the floating elements (9) to flood the particle collection surface (7) and to float the particles deposited on the particle collection surface (7) in a floating operating mode of the particle collection device (1);
- draining the supplied liquid, in particular the water or the cold cleaner, through the draining elements (10) in a draining operating mode.

14. The method according to claim 13,
**characterized in that**
in a final drying operating mode of the particle collection device (1), an end element (18) comprising a particle filter (16) and/or an air-permeable membrane is connected to the end section (3) of the suction hose (2) so as to conduct the suction air in order to dry the floating elements (9) and in particular also the replaceable fabric filter (6) by means of the suction air volume flow after a floating process, no additional particles being capable of being suctioned by means of the suction air volume flow.

## Revendications

1. Dispositif (1) de collection de particules pour collecter des particules de surfaces pour une analyse de particules dans le contexte de la détermination de la propreté technique pour des éprouvettes, notamment des cartes imprimées, des modules de batterie et/ou des empilements de batterie, ledit dispositif (1) de collection de particules comprenant un tuyau d'aspiration (2) ayant une partie d'extrémité (3), ledit tuyau d'aspiration (2) étant destiné à aspirer un mélange de particules et d'air de la surface à être essayée de l'éprouvette au moyen d'un débit volumétrique d'air d'aspiration dans un mode de fonctionnement d'aspiration du dispositif (1) de collection de particules, une unité (4) de collection de particules comprenant un filtre à manches (6) remplaçable qui est fixé dans des moyens (5) de retenue de filtre et qui a une surface (7) de collection de particules, les moyens (5) de retenue de filtre disposant le filtre à manches (6) dans le débit volumétrique d'air d'aspiration de telle manière que le filtre à manches (6) est capable d'être complètement traversé par le mélange de particules et d'air et que les particules du mélange de particules et d'air se déposent sur la surface (7) de collection de particules, et des moyens (8) de génération de pression négative pour générer le débit volumétrique d'air d'aspiration pour aspirer le mélange de particules et d'air,
**caractérisé par**
des moyens de flottation (9) pour inonder la surface (7) de collection de particules d'un liquide, notamment de l'eau ou d'un nettoyant à froid, dans un mode de fonctionnement de flottation du dispositif (1) de collection de particules pour faire flotter les particules déposées, notamment de manière inhomogène, sur la surface (7) de collection de particules dans le mode de fonctionnement d'aspiration, notamment pour une courte durée, et des moyens d'évacuation (10) pour évacuer le liquide, notamment l'eau ou le nettoyant à froid, dans un mode de fonctionnement d'évacuation de manière que le liquide, notamment l'eau ou le nettoyant à froid, traverse le filtre à manches (6) et les particules sont capables d'être retenues sur la surface (7) de collection de particules, notamment de façon à être réparti de manière homogène.

2. Dispositif de collection de particules selon la revendication 1,
**caractérisé en ce que**
les moyens (5) de retenue de filtre orientent le filtre à manches (6) de telle manière dans le mode de fonctionnement de flottation, le mode de fonctionnement d'évacuation et/ou le mode de fonctionnement d'aspiration que la surface (7) de collection de particules est orientée dans une plage de +/- 20°, de préférence de +/- 10°, plus préférentiellement de +/- 5°, autour du plan horizontal (H).

3. Dispositif de collection de particules selon la revendication 1 ou 2, **caractérisé en ce que**
les moyens (5) de retenue de filtre sont réalisés pour loger un filtre à manches (6) ayant une surface (7) de collection de particules ronde ou ovale.

4. Dispositif de collection de particules selon l'une quelconque des revendications 1 à 3,
**caractérisé en ce que**
les moyens de flottation (9) ont une partie de tube en forme de cylindre creux, notamment un tube (12), ou une partie d'enveloppe entourant une base ovale pour réaliser une bassine de flottation (11), les moyens de flottation (9) s'étendant à partir des moyens (5) de retenue de filtre, notamment de la surface (7) de collection de particules, le long d'une direction verticale (HR) dans le sens opposé à la direction d'écoulement du débit volumétrique d'air d'aspiration dans le mode de fonctionnement d'aspiration.

5. Dispositif de collection de particules selon la revendication 4,
**caractérisé en ce que**
les moyens (5) de retenue de filtre et au moins la bassine de flottation (11) sont réalisés comme module (13) et/ou unité qui est/sont capable(s) d'être relié(s) en série de manière à conduire l'air d'aspiration, notamment cascadable(s), la majorité de modules (13) est disposé de manière à conduire l'air d'aspiration de telle manière que toutes des surfaces (7) de collection de particules sont inondables au moyen des moyens de flottation (9) dans le mode de fonctionnement de flottation.

6. Dispositif de collection de particules selon l'une quelconque des revendications 1 à 5,
**caractérisé en ce que**
les moyens (8) de génération de pression négative, l'unité (4) de collection de particules ou les moyens d'évacuation (10) comprennent des moyens d'arrêt (14), notamment une soupape commutable, pour accumuler le liquide pour l'inondation de la surface (7) de collection de particules ou sont associés à ceux-ci.

7. Dispositif de collection de particules selon l'une quelconque des revendications 1 à 6,
**caractérisé en ce que**
les moyens (5) de retenue de filtre comprennent au moins un moyen (15) d'application manuelle de force, notamment un ressort de compression, le filtre à manches (6) étant capable d'être serré dans les moyens (5) de retenue de filtre à la circonférence par l'application manuelle de force.

8. Dispositif de collection de particules selon l'une quelconque des revendications 1 à 7,
**caractérisé en ce que**
le dispositif (1) de collection de particules comprend un réservoir de liquide pour la fourniture automatisée du liquide, notamment de l'eau ou du nettoyant à froid, dans le mode de fonctionnement de flottation ou **en ce que** les moyens de flottation (9) ont une ouverture (17) capable d'être fermée, le liquide, notamment l'eau ou le nettoyant à froid, étant capable d'être fourni manuellement dans un état d'ouverture temporairement productible des moyens de flottation (9) et/ou de l'unité (4) de collection de particules.

9. Dispositif de collection de particules selon l'une quelconque des revendications 1 à 8,
**caractérisé en ce que**
le dispositif (1) de collection de particules a un élément de terminaison (18) qui comprend un filtre à particules (16) et/ou une membrane perméable à l'air pour fermer une ouverture de ventilation (19) et qui est capable d'être relié à la partie d'extrémité (3) du tuyau d'aspiration (2) de manière à conduire l'air d'aspiration pour réaliser, notamment dans le mode de fonctionnement d'évacuation, une phase de séchage final, aucune particule supplémentaire n'étant capable d'être aspirée au moyen du tuyau d'aspiration (2).

10. Dispositif de collection de particules selon l'une quelconque des revendications 1 à 9,
**caractérisé en ce que**
la partie d'extrémité (3) étant capable d'être reliée à une buse d'aspiration (20), qui est produite par la fabrication additive et a une ouverture d'aspiration (21) de type interstice ou de type fente, de manière à conduire l'air d'aspiration, la surface de la buse d'aspiration (20) ayant une rugosité d'une profondeur moyenne de rugosité ayant une valeur Rz de 5 µm à 20 µm, de préférence de 8 µm à 15 µm, plus préférentiellement de moins de 12 µm.

11. Système d'analyse de particules pour la détermination de la propreté technique d'éprouvettes, notamment de cartes imprimées, de modules de batterie et/ou d'empilements de batterie, ledit système d'analyse de particules comprenant un dispositif (1) de collection de particules selon l'invention selon l'une quelconque des revendications précédentes, et un réservoir de liquide avec un liquide, notamment de l'eau ou un nettoyant à froid, pour la fourniture manuelle ou automatisée du liquide pour faire flotter les particules et avec des moyens d'analyse comprenant notamment un microscope photonique et/ou un microscope et/ou des moyens d'évaluation gravimétriques.

12. Utilisation d'un dispositif de collection de particules selon l'une quelconque des revendications 1 à 10 ou d'un système d'analyse de particules selon la revendication 11 pour essayer la propreté technique d'éprouvettes, notamment de cartes imprimées, de modules de batterie et/ou d'empilements de batterie.

13. Procédé pour la détermination de la propreté technique d'éprouvettes, notamment de cartes imprimées, de modules de batterie et/ou d'empilements de batterie, notamment dans le contexte de mesures d'assurance de la qualité industrielles ou dans le contexte de la validation de processus de fabrication industriels, en utilisant un dispositif (1) de collection de particules selon l'une quelconque des revendications 1 à 10 et/ou un système d'analyse de particules selon la revendication 11, ledit procédé comprenant les étapes suivantes :
- aspirer des particules d'une surface à être essayée d'une éprouvette, notamment d'une carte imprimée, d'un module de batterie et/ou d'un empilement de batterie, au moyen du dispositif de collection de particules selon l'invention dans un mode de fonctionnement d'aspiration, le mélange de particules et d'air aspiré au moyen du débit volumétrique d'air d'aspiration traversant le filtre à manches (6) remplaçable qui est fixé dans les moyens (5) de retenue de filtre et les particules restant ainsi sur la surface (7) de collection de particules ;
- inonder la surface (7) de collection de particules du liquide, notamment de l'eau ou du nettoyant à froid, au moyen des moyens de flottation (9) pour inonder la surface (7) de collection de particules et pour faire flotter les particules déposées sur la surface (7) de collection de particules dans un mode de fonctionnement de flottation du dispositif (1) de collection de particules ;
- évacuer le liquide fourni, notamment l'eau ou le nettoyant à froid, par les moyens d'évacuation (10) dans un mode de fonctionnement d'évacuation.

14. Procédé selon la revendication 13,
**caractérisé en ce que**
dans un mode de fonctionnement de séchage final du dispositif (1) de collection, un élément de terminaison (18) comprenant un filtre à particules (16) et/ou une membrane perméable à l'air est relié à la partie d'extrémité (3) du tuyau d'aspiration (2) de manière à conduire l'air d'aspiration pour sécher les moyens de flottation (9) et notamment aussi le filtre à manches (6) remplaçable au moyen du débit volumétrique d'air d'aspiration après un processus de flottation, aucune particule supplémentaire n'étant capable d'être aspirée au moyen du débit volumétrique d'air d'aspiration.
